# EUROPÄISCHE PATENTSCHRIFT

(11) **EP 1 969 171 B1**
(45) Veröffentlichungstag und Bekanntmachung des Hinweises auf die Patenterteilung: **21.09.2016**
(21) Anmeldenummer: 06830288.4
(22) Anmeldetag: 01.12.2006
(51) Int. Cl.: D06F 58/24, F25B 21/02

(54) **WÄRMEPUMPENANLAGE, INSBESONDERE FÜR EIN HAUSGERÄT**
HEAT PUMP SYSTEM, IN PARTICULAR FOR A HOUSEHOLD APPLIANCE
INSTALLATION DE POMPE A CHALEUR, EN PARTICULIER POUR APPAREIL MENAGER

(30) Priorität: 28.12.2005 DE 102005062804
(43) Veröffentlichungstag der Anmeldung: 17.09.2008
(73) Patentinhaber: BSH Hausgeräte GmbH, 81739 München (DE)
(72) Erfinder: NITSCHMANN, Kai, 15366 Neuenhagen (DE); STEFFENS, Günter, 14624 Dallgow-Döberitz (DE); STOLZE, Andreas, 14612 Falkensee (DE)
(86) Internationale Anmeldenummer: PCT/EP2006/069221
(87) Internationale Veröffentlichungsnummer: WO 2007/077069

(56) Entgegenhaltungen:
- DE-A1- 1 410 206
- DE-A1- 1 763 043
- DE-A1- 1 817 058
- DE-A1- 2 639 999
- DE-A1- 2 732 321
- DE-A1- 3 019 092
- DE-A1- 3 627 747
- DE-A1- 4 101 644
- DE-A1- 4 233 172
- DE-A1- 10 334 792
- DE-A1- 19 510 895
- DE-B- 1 167 571
- DE-B- 1 190 961
- DE-U- 6 926 182
- DE-U- 7 410 935
- DE-U1- 20 101 641
- FR-A- 1 262 399
- FR-A- 1 595 248
- JP-A- 2 109 977
- JP-A- 2 195 123
- JP-A- 3 169 319
- JP-A- 8 057 194
- US-A1- 3 036 383
- US-A1- 3 111 166
- US-A1- 3 231 714

## Beschreibung

Die Erfindung betrifft eine Wärmepumpenanlage mit zumindest zwei Peltier-Elementen, welche in Reihe geschaltet und mit einer Spannungsversorgung verbunden sind.

Aus der DE 41 01 644 A1 ist eine Wärmepumpenanlage bekannt. Diese Wärmepumpenanlage besteht aus einer Anzahl von Peltier-Elementen und einer diesen zugeordneten Stromversorgung sowie einer Einrichtung zur Zuführung eines abzukühlenden Mediums zu einer Kaltseite der Peltier-Elemente und einer Einrichtung zur Abnahme eines aufgeheizten Mediums an einer Warmseite der Peltier-Elemente. Die Peltier-Elemente sind hintereinander geschaltet angeordnet und in Gruppen unterteilt derart, dass diese Gruppen elektrisch und wärmetechnisch einzeln ansteuerbar ihrerseits hintereinander geschaltet sind.

Aus einem Dokument, welches am 25. November 2005 von der Internet-Adresse http://de.wikipedia.org/wiki/Peltier-Element herunterladbar war, ist ein Peltier-Element in Aufbau und Funktion bekannt, welches den vorstehend beschriebenen Aufbau aufweist. Die Halbelemente dieses Peltier-Elements sind säulen- oder quaderförmig ausgebildet und bestehen aus dotierten Halbleitern als Werkstoffe. Die Halbleiter sind insbesondere Wismut-Tellurid, und es kommen ein p-leitend dotierter und ein n-leitend dotierter Halbleiter zum Einsatz. Jeweils ein Halbelement aus dem p-leitend dotierten Halbleiter und ein Halbelement aus dem n-leitend dotierten Halbleiter sind jeweils an einer Seite über ein Leiterplättchen, auch als Metallbrücke bezeichnet, miteinander verbunden, und an einer anderen Seite, welche der genannten einen Seite gegenüber liegt, über jeweils ein weiteres Leiterplättchen mit einem weiteren Halbelement oder einem Anschlusskontakt zum Anschluss des Peltier-Elements an ein elektrisches Netzwerk verbunden.

Weitere Hinweise zu Grundlagen, anwendungsbezogener Auswahl und Montage von Peltier-Elementen ergeben sich aus Dokumenten, die am 25. November 2005 von den Internet-Adressen http://www.quick-ohm.de/waerme/down load/E rlaeuterung-zu-Peltierelementen.pdf und http://www.quick-ohm.de/waerme/download/Einbau.pdf herunterladbar waren.

Aus der DE 1 410 206 A geht eine Waschmaschine hervor, in welcher Waschgut nicht nur gewaschen, sondern auch getrocknet werden kann. Für die dazu erforderlichen zusätzlichen Einrichtungen zeigt die Schrift mehrere Alternativen; insbesondere können eine elektrische Heizvorrichtung zum Erwärmen eines zur Trocknung von Waschgut eingesetzten Luftstroms und ein einfacher Wärmetauscher zum Abkühlen des erwärmten Luftstroms nach dem Beaufschlagen des Waschguts vorgesehen sein, der Heizer und der Kühler können aber auch zu einer Wärmepumpenanlage gehören. Die Wärmepumpenanlage kann mit Peltier-Elementen zur Nutzung des thermoelektrischen Effekts arbeiten.

Eine aus einem in der Datensammlung "Patent Abstracts of Japan" zur JP 08 057 194 A gehörigen englischen Kurzauszug hervorgehende Vorrichtung zum Trocknen von Waschgut enthält in einem Kanalsystem neben einem Heizer und einem Kühler, welche beide zu einer thermoelektrisch betreibbaren Wärmepumpenanlage gehören, einen dem Kühler vorgeschalteten zusätzlichen Wärmetauscher zur Abkühlung des von dem Waschgut abgeführten Luftstroms und eine dem Heizer nachgeschaltete zusätzliche Heizeinrichtung zum weiteren Erwärmen des Luftstroms vor dem Beaufschlagen des Waschguts. Aus FR-1262399 ist weiter eine Waschguthochner mit Peltierelementen bekannt.

Bei jedem bekannten Hausgerät ist der Einsatz einer derartigen Wärmepumpenanlage noch relativ kostenintensiv, da ein hoher Energieverbrauch für den Betrieb der Wärmepumpenanlage erforderlich ist.

Daher ist es Aufgabe der Erfindung, eine gattungsgemäße Wärmepumpenanlage zu schaffen, welche einen reduzierten Energieverbrauch aufweist.

Diese Aufgabe wird durch eine Wärmepumpenanlage, welche die Merkmale nach Patentanspruch 1 aufweist, gelöst.

Die erfindungsgemäße Wärmepumpenanlage umfasst eine Wärmepumpe mit zumindest zwei Peltier-Elementen, welche schaltungstechnisch in Reihe geschaltet sind. Die Peltier-Elemente sind mit einer Energieversorgung, insbesondere einer Spannungsversorgung, verbunden. Ein elektrischer Vorwiderstand ist in Reihe zu den Peltier-Elementen geschaltet und ebenfalls mit der Energieversorgung verbunden, wobei die Peltier-Elemente und der Vorwiderstand gemeinsam von der Energieversorgung energieversorgt sind. Dadurch kann eine Wärmepumpenanlage bereitgestellt werden, welche aufgrund des schaltungstechnischen Konzeptes einen deutlich reduzierten Energieverbrauch aufweist.

Vorzugsweise ist der Vorwiderstand derart ausgelegt, dass die Summe der einzelnen Spannungsabfälle an dem Vorwiderstand und den Peltier-Elementen im Wesentlichen gleich der Spannung der Energieversorgung ist. Bevorzugt ist durch die Energieversorgung eine gleichgerichtete und vorzugsweise geglättete Netzspannung bereitstellbar.

Vorzugsweise ist der Vorwiderstand einer Gleichrichterschaltung, insbesondere einer Brücken-Gleichrichterschaltung, nachgeschaltet. Alternativ ist der Vorwiderstand der Gleichrichterschaltung vorgeschaltet. In dem zuletzt genannten Fall kann eine einfachere Gleichrichterschaltung verwendet werden, wodurch eine Kostenreduzierung erreicht werden kann.

Die Gleichrichterschaltung ist vorzugsweise als Brücken-Gleichrichterschaltung, insbesondere als Graetz-Brücke, ausgebildet. Durch diese Ausgestaltung mit dem vorgeschalteten Vorwiderstand erfolgt bereits ein Spannungsabfall an diesem Vorwiderstand und somit eine Reduzierung der anliegenden elektrischen Spannung vor der Gleichrichterschaltung.

In bevorzugter Weise ist die Wärmepumpe in einer offenen oder geschlossenen Prozessluftführung eines Hausgeräts zur Pflege von Wäschestücken, insbesondere eines Wäschetrockners, angeordnet. Dadurch wird ein Hausgerät zur Pflege von Wäschestücken bereitgestellt, welches eine thermoelektrische Wärmepumpe aufweist und bei dem ein Trocknungsprozess energiereduziert und dadurch auch kostenreduziert durchgeführt werden kann. Bei geschlossener Prozessluftführung kann ein Prozessluftkreislauf bereitgestellt werden und somit ein Umlufttrockner realisiert sein.

Vorzugsweise ist der Vorwiderstand im Prozessluftkreislauf den Peltier-Elementen nachgeordnet angeordnet. Dies bedeutet, dass in Strömungsrichtung einer Prozessluft der Vorwiderstand nach dem Peltier-Modul angeordnet ist.

Vorzugsweise ist der Vorwiderstand derart angeordnet, dass eine in der Prozessluftführung strömende Prozessluft durch die im Vorwiderstand erzeugte Wärme erwärmbar ist. Die durch den Vorwiderstand abgegebene Energie wird so zum Aufwärmen der Prozessluft verwendet. Dies entspricht einer direkten Einkopplung der elektrischen Verlustleistung des Vorwiderstands in die Prozessluft.

Vorzugsweise ist darüber hinaus vorgesehen, dass in der Prozessluftführung eine Heizeinrichtung angeordnet ist und der Vorwiderstand zumindest eine Heizwendel der Heizeinrichtung ist. Dadurch kann ein technisch sehr effektives Konzept im Hinblick der Energieminimierung der Wärmepumpenanlage erreicht werden. Darüber hinaus kann ein bereits vorhandenes Bauteil in Form der Heizwendel der Heizeinrichtung als Vorwiderstand verwendet werden. Dies ermöglicht somit auch ein bauteilarmes Konzept.

Eine Reduzierung der Kosten für einen Trocknungsprozess in einem solchen Hausgerät wird vorzugsweise dadurch erreicht, dass diese Wärmepumpenanlage zwischen einem an sich üblichen Wärmetauscher und der Heizeinrichtung, welche gegebenenfalls mit einer verringerten Heizleistung betrieben wird, mit einer deutlich reduzierten Anzahl an Peltier-Elementen ausgebildet ist. Eine entsprechende "kleine" Wärmepumpenanlage weist insbesondere zehn Peltier-Elemente auf, wohingegen eine "normale" Wärmepumpenanlage etwa 30 Peltier-Elemente umfasst. Bei einer Ausgestaltung als "kleine" Wärmepumpenanlage ist ein gesamter Spannungsabfall über die Peltier-Elemente insbesondere kleiner als eine angelegte gleichgerichtete Netzspannung, was allerdings eine angepasste, insbesondere elektronische Stromversorgung der Peltier-Elemente erforderlich macht.

Ausführungsbeispiele der Erfindung werden nachfolgend anhand der schematischen Zeichnung näher erläutert. In der Zeichnung zeigen:
- Fig. 1: eine Schnittansicht eines Wäschetrockners mit einer Wärmepumpenanlage;
- Fig. 2: eine elektronische Schaltungsanordnung der Wärmepumpenanlage gemäß einer ersten Ausführung; und
- Fig. 3: eine elektronische Schaltungsanordnung der Wärmepumpenanlage gemäß einer zweiten Ausführung.

In den Figuren sind gleiche oder funktionsgleiche Elemente mit den gleichen Bezugszeichen versehen.

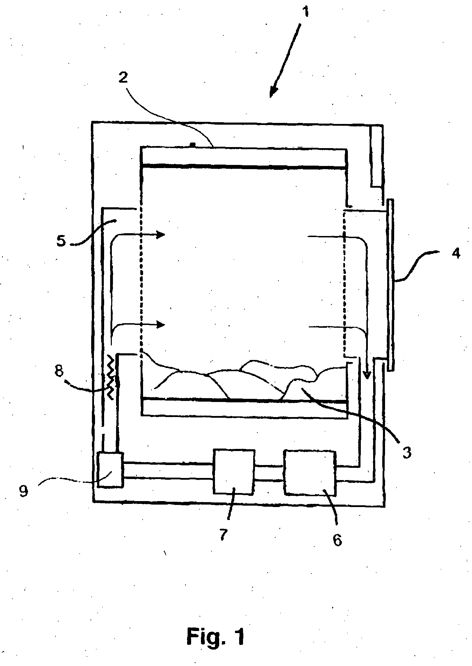

In Fig. 1 ist in schematischer Weise eine Schnittdarstellung eines Hausgeräts 1 zur Pflege von Wäschestücken gezeigt, welches im Ausführungsbeispiel als Wäschetrockner 1 ausgebildet ist. Dieser Wäschetrockner 1 ist nach dem Umluftprinzip ausgebildet und umfasst einen Behälter 2 zum Aufnehmen der Wäschestücke 3, der im Inneren des Wäschetrockners 1 um eine nicht dargestellte waagrechte Drehachse drehbar gelagert ist. Der nachfolgend als Trommel 2 bezeichnete Behälter weist an der in der Zeichnung rechts dargestellten vorderen Stirnseite eine Beschickungsöffnung 4 auf, um zu trocknende Textilien bzw. Wäschestücke 3 in die Trommel 2 laden zu können. An der Rückseite der Trommel 2 ist eine Mehrzahl an Öffnungen (nicht dargestellt) ausgebildet, durch die trocknende Prozessluft einströmen kann, wie durch Pfeile symbolisiert.

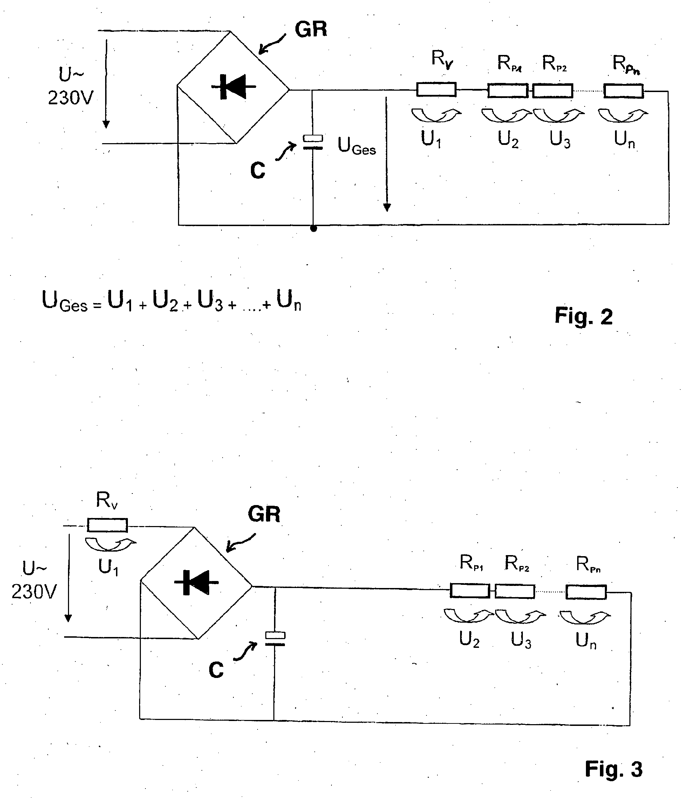

Wie aus der Darstellung in Fig. 1 zu erkennen ist, weist der Wäschetrockner 1 einen Prozessluftkreislauf 5 auf, in welchem die Trommel 2 angeordnet ist. Die durch die Trommel 2 in Richtung der Pfeildarstellung geleitete Prozessluft wird im Kreislauf geführt, wobei die Prozessluft vor dem Eintritt in die Trommel 2 erhitzt wird und nach dem Austritt aus der Trommel 2 zur Kondensation von in der Prozessluft enthaltenen Feuchtigkeit abgekühlt wird. Dazu weist der Wäschetrockner 1 einen ersten Wärmetauscher 6 auf, welcher zur Kondensation der mit Feuchtigkeit beladenen Luft ausgebildet ist. Durch diesen Wärmetauscher 6 kann somit eine Entfeuchtung der aus der Trommel 2 austretenden Luft erreicht werden. Darüber hinaus umfasst der Wäschetrockner 1 eine ebenfalls im Prozessluftkreislauf 5 angeordnete Wärmepumpe 7, welche eine Mehrzahl an Peltier-Elementen (vgl. Figuren 2 und 3) aufweist. Die Peltier-Elemente sind in Reihe geschaltet und mit einer Netzspannung energieversorgbar. Die Netzspannung ist im Ausführungsbeispiel gleichgerichtet und geglättet.

Die Wärmepumpe 7 ist als doppelter Wärmetauscher 7 ausgebildet. Durch die Versorgung der Peltier-Elemente mit elektrischer Energie werden eine Kaltseite und eine Warmseite erzeugt, welche derart angeordnet sind, dass die die Wärmepumpe 7 durchströmende Prozessluft als erstes an die Kaltseite gelangt, wo sie weiter abgekühlt und entfeuchtet wird, und als zweites zur Warmseite gelangt, wo sie wieder erwärmt wird.

Eine weitere Erwärmung der Prozessluft wird durch eine Heizeinrichtung 8 erreicht, welche im Ausführungsbeispiel benachbart zum Eintritt der Prozessluft in die Trommel 2 im Prozessluftkreislauf 5 angeordnet ist. Die Strömungsrichtung der Prozessluft wird durch das Gebläse 9 erzeugt, welches der Heizeinrichtung 8 in Strömungsrichtung vorgeschaltet ist.

Innerhalb der Trommel 2 kommt die erhitzte Prozessluft mit den zu trocknenden Wäschestücken 3 in Berührung und nimmt dabei Feuchtigkeit auf.

Die ausströmende Prozessluft verlässt die Trommel 2 durch eine zur Beschickungsöffnung 4 benachbarte Öffnung und strömt anschließend durch Öffnungen aus, die an der zum Inneren der Tommel 2 gewandten Rückseite der Beschickungstür 4 ausgebildet sind. In dem Strömungskanal zwischen der Beschickungstür 4 und dem ersten Wärmetauscher 6 kann zumindest ein Flusenfilter (nicht dargestellt) angeordnet sein.

Die Heizeinrichtung 8 enthält einen elektrischen Vorwiderstand 8 in Reihe zu den Peltier-Elementen der Wärmepumpe 7 geschaltet, vgl. auch Figuren 2 und 3. Der elektrische Vorwiderstand 8 ist ebenfalls mit der gleichgerichteten und geglätteten Netzspannung verbunden. Wie in Fig. 1 zu erkennen ist, ist der lediglich symbolisch dargestellte elektrische Vorwiderstand 8 in dem Prozessluftkreislauf 5 in Strömungsrichtung der Prozessluft der Wärmepumpe 7 und somit auch den Peltier-Elementen nachgeordnet oder nachgeschaltet. Die im elektrischen Vorwiderstand 8 erzeugte Wärme wird zum zusätzlichen Aufwärmen der vorbeiströmenden Prozessluft verwendet.

Im Ausführungsbeispiel ist der elektrische Vorwiderstand 8 als eine Heizwendel in der Heizeinrichtung 8, welche anforderungsgemäß mehrere weitere (nicht dargestellte) Heizwendeln enthält, ausgebildet.

In Fig. 2 ist eine erste Ausgestaltung einer Energieversorgung der Wärmepumpenanlage gezeigt. Die Peltier-Elemente sind in Reihe geschaltet und durch Widerstände R_{P1} bis R_{Pn} charakterisiert. An diesen Widerständen R_{P1} bis R_{Pn} fallen Spannungen U₂ bis Uₙ₊₁ ab. Darüber hinaus ist ein elektrischer Vorwiderstand 8 mit dem Wert R_{V} (vgl. Figur 1) in Reihe zu diesen Widerständen R_{P1} bis R_{Pn} und somit in Reihe zu den Peltier-Elementen geschaltet. Über dem elektrischen Vorwiderstand R_{V} fällt eine Spannung U₁ ab. Wie des Weiteren aus der Darstellung in Fig. 2 zu erkennen ist, wird in der Energieversorgung für die Wärmepumpe 7 eine Netzspannung als Wechselspannung bereitgestellt und durch eine Brücken-Gleichrichterschaltung GR gleichgerichtet. Durch den Kondensator C wird die gleichgerichtete Netzspannung geglättet. Der Vorwiderstand R_{V} ist derart ausgelegt, dass die Summe der Einzel-Spannungs-Abfälle U₁ bis Uₙ₊₁ im Wesentlichen gleich der gleichgerichteten und geglätteten Netzspannung U_{ges} ist. In dieser in Fig. 2 gezeigten Ausführung ist der elektrische Vorwiderstand R_{V} der Brücken-Gleichrichterschaltung GR nachgeschaltet.

In Fig. 2 ist eine weitere Ausführung einer Energieversorgung gezeigt, in der der elektrische Vorwiderstand 8 bzw. R_{V} vor die Brücken-Gleichrichterschaltung GR geschaltet ist. Dadurch kann bereits vor der Brücken-Gleichrichterschaltung GR ein Spannungsabfall an diesem elektrischen Vorwiderstand 8 bzw. R_{V} erzeugt und somit schon vor der Brücken-Gleichrichterschaltung GR eine Spannungsteilung durchgeführt werden. Bei dieser Anordnung kann die als Graetz-Brücke ausgebildete Brücken-Gleichrichterschaltung GR kostengünstiger ausgebildet werden. Darüber hinaus kann bei dieser Ausführung auch ein kostengünstigerer Kondensator C verwendet werden.

Durch die in Fig. 2 und 3 gezeigten Schaltbilder sind zwei verschiedene Energieversorgungen und elektrische Verschaltungen der Peltier-Elemente mit dem elektrischen Vorwiderstand 8 der Wärmepumpenanlage gezeigt. Diese sollen jedoch nicht als abschließend verstanden werden und weisen darüber hinaus auch nur die für die vorliegende Erläuterung wesentlichen Bauteile auf. Die Energieversorgungen können somit ergänzt oder abgeändert werden, ohne den wesentlichen Gedanken der vorgeschlagenen Wärmepumpenanlage zu verlassen.

## Patentansprüche

1. Wärmepumpenanlage umfassend eine Wärmepumpe (7) mit zumindest zwei Peltier-Elementen, welche in Reihe geschaltet sind und mit einer Energieversorgung verbunden sind, wobei ein elektrischer Vorwiderstand (8) in Reihe zu den Peltier-Elementen geschaltet ist und die Peltier-Elemente und der Vorwiderstand (8) gemeinsam von der Energieversorgung energieversorgt sind, wobei die Wärmepumpe (7) in einer Prozessluftführung (5), insbesondere einem Prozessluftkreislauf (5), eines Hausgeräts (1) zur Pflege von Wäschestücken (3), insbesondere eines Wäschetrockners (1), angeordnet ist, **dadurch gekennzeichnet, dass** eine in der Prozessluftführung (5) strömende Prozessluft durch von dem Vorwiderstand (8) erzeugte Wärme erwärmbar ist.

2. Wärmepumpenanlage nach Anspruch 1, **dadurch gekennzeichnet, dass** der Vorwiderstand (8) derart ausgelegt ist, dass die Summe der Einzel-Spannungsabfälle (U₁ bis Un) an dem Vorwiderstand (8; U₁) und den Peltier-Elementen (U₂ bis Uₙ₊₁) im Wesentlichen gleich der Spannung (U_{Ges}) der Energieversorgung ist.

3. Wärmepumpenanlage nach Anspruch 1 oder 2, **dadurch gekennzeichnet, dass** durch die Energieversorgung eine gleichgerichtete und vorzugsweise geglättete Netzspannung bereitstellbar ist.

4. Wärmepumpenanlage nach einem der vorhergehenden Ansprüche, **dadurch gekennzeichnet, dass** der Vorwiderstand (8) einer Gleichrichterschaltung (GR), insbesondere einer Brücken-Gleichrichterschaltung (GR), nachgeschaltet ist.

5. Wärmepumpenanlage nach einem der Ansprüche 1 bis 3, **dadurch gekennzeichnet, dass** der Vorwiderstand (8) einer Gleichrichterschaltung (GR), insbesondere einer Brücken-Gleichrichterschaltung (GR), vorgeschaltet ist.

6. Wärmepumpenanlage nach einem der vorhergehenden Ansprüche, **dadurch gekennzeichnet, dass** der Vorwiderstand (8) in der Prozessluftführung (5) der Wärmepumpe (7) nachgeordnet angeordnet ist.

7. Wärmepumpenanlage nach einem der vorhergehenden Ansprüche, **dadurch gekennzeichnet, dass** in der Prozessluftführung (5) eine Heizeinrichtung (8) angeordnet ist und der Vorwiderstand (8) eine Heizwendel der Heizeinrichtung (8) ist.

8. Wärmepumpenanlage nach Anspruch 7, **dadurch gekennzeichnet, dass** die Wärmepumpe (7) zwischen einem Wärmetauscher (6) zur Abkühlung der Prozessluft und der Heizeinrichtung (8) angeordnet ist.

## Claims

1. Heat pump system comprising a heat pump (7) with at least two Peltier elements, which are switched in series and are connected to an energy supply, wherein an electrical dropping resistor (8) is switched in series with the Peltier elements and the Peltier elements and the dropping resistor (8) are jointly supplied with energy by the energy supply, wherein the heat pump (7) is arranged in a process air conduit (5), especially a process air circuit (5) of a domestic appliance (1) for care of washed items (3), especially of a tumble dryer (1), **characterised in that** process air flowing in the process air conduit (5) is able to be heated up by heat generated by the dropping resistor (8).

2. Heat pump system according to claim 1, **characterised in that** the dropping resistor (8) is designed so that the sum of the individual voltage drops (U₁ to Uₙ) at the dropping resistor (8; U₁) and the Peltier elements (U₂ to Uₙ₊₁) is essentially equal to the voltage (U_{Ges}) of the energy supply.

3. Heat pump system according to claim 1 or 2, **characterised in that** a rectified and preferably smoothed ac voltage can be provided by the energy supply.

4. Heat pump system according to one of the previous claims, **characterised in that** the dropping resistor (8) is connected downstream from a rectifier circuit (GR), especially a bridge rectifier circuit (GR).

5. Heat pump system according to one of claims 1 to 3, **characterised in that** the dropping resistor (8) is connected upstream from a rectifier circuit (GR), especially a bridge rectifier circuit (GR).

6. Heat pump system according to one of the previous claims, **characterised in that** the dropping resistor (8) is arranged in the process air conduit (5) downstream from the heat pump (7).

7. Heat pump system according to one of the previous claims, **characterised in that** a heating device (8) is arranged in the process air conduit (8) and the dropping resistor (8) is a heating coil of the heating device (8).

8. Heat pump system according to claim 7, **characterised in that** the heat pump (7) is arranged between a heat exchanger (6) for cooling down the process air and the heating device (8).

## Revendications

1. Installation de pompe à chaleur comprenant une pompe à chaleur (7) avec au moins deux éléments Peltier branchés en série et reliés à une alimentation énergétique, dans lequel une résistance additionnelle électrique (8) est branchée en série par rapport aux éléments Peltier et les éléments Peltier et la résistance additionnelle (8) sont alimentés ensemble en énergie par l'alimentation énergétique, dans lequel la pompe à chaleur (7) est disposée dans un guidage d'air de processus (5), en particulier un circuit d'air de processus (5) d'un appareil ménager (1) pour l'entretien du linge (3), en particulier d'un sèche-linge (1), **caractérisée en ce qu'**un air de processus s'écoulant dans le guidage d'air de processus (5) peut être chauffé par la chaleur générée par la résistance additionnelle (8).

2. Installation de pompe à chaleur selon la revendication 1, **caractérisée en ce que** la résistance additionnelle (8) est dimensionnée de telle sorte que la somme des chutes de tension individuelles (U₁ à Uₙ) au niveau de la résistance additionnelle (8; U₁) et des éléments Peltier (U₂ à Uₙ₊₁) équivaut essentiellement à la tension (U_{Ges}) de l'alimentation énergétique.

3. Installation de pompe à chaleur selon la revendication 1 ou 2, **caractérisée en ce que** l'alimentation énergétique est en mesure de fournir une tension de réseau redressée et de préférence égalisée.

4. Installation de pompe à chaleur selon l'une des revendications précédentes, **caractérisée en ce que** la résistance additionnelle (8) est branchée en aval d'un montage redresseur (GR), en particulier d'un montage redresseur en pont (GR).

5. Installation de pompe à chaleur selon l'une des revendications 1 à 3, **caractérisée en ce que** la résistance additionnelle (8) est branchée en amont d'un montage redresseur (GR), en particulier d'un montage redresseur en pont (GR).

6. Installation de pompe à chaleur selon l'une des revendications précédentes, **caractérisée en ce que** la résistance additionnelle (8) est disposée en aval dans le guidage d'air de processus (5) de la pompe à chaleur (7).

7. Installation de pompe à chaleur selon l'une des revendications précédentes, **caractérisée en ce qu'**un dispositif de chauffage (8) est disposé dans le guidage d'air de processus (5) et la résistance additionnelle (8) est un élément spiralé chauffant du dispositif de chauffage (8).

8. Installation de pompe à chaleur selon la revendication 7, **caractérisée en ce que** la pompe à chaleur (7) est disposée entre un échangeur de chaleur (6) servant à refroidir l'air de processus et le dispositif de chauffage (8).
